Europäisches Patentamt

European Patent Office

Office européen des brevets

(19)

(11) Numéro de publication: **0 339 301 B1**

(12) **FASCICULE DE BREVET EUROPEEN**

(45) Date de publication de fascicule du brevet: **26.05.93**

(51) Int. Cl.⁵: **G21D 3/04**, G21C 17/10, G21C 7/36, G21C 7/00

(21) Numéro de dépôt: **89105803.4**

(22) Date de dépôt: **03.04.89**

(54) **Procédé de détermination et d'évaluation de la marge d'arrêt d'urgence d'un réacteur nucléaire à eau pressurisée.**

(30) Priorité: **05.04.88 FR 8804439**

(43) Date de publication de la demande:
**02.11.89 Bulletin 89/44**

(45) Mention de la délivrance du brevet:
**26.05.93 Bulletin 93/21**

(84) Etats contractants désignés:
**BE CH DE ES GB IT LI SE**

(56) Documents cités:
**EP-A- 0 051 542
EP-A- 0 108 265
EP-A- 0 238 299
FR-A- 2 349 922
GB-A- 1 018 012

PATENT ABSTRACTS OF JAPAN, vol. 2, no. 57 (M-78)[684], 25 avril 1978, page 684 M 78; & JP-A-53 16 192 (HITACHI SEISAKUSHO K.K.) 14-02-1978**

(73) Titulaire: **FRAMATOME
Tour Fiat 1, Place de la Coupole
F-92400 Courbevoie(FR)**

(72) Inventeur: **Girieud, Patrick Résidence La Cérisaie
71, rue Jean Baptiste Clément
F-92140 Clamart(FR)**

(74) Mandataire: **Weinmiller, Jürgen et al
Lennéstrasse 9 Postfach 24
W-8133 Feldafing (DE)**

## Description

La présente invention concerne la commande des centrales électro-nucléaires à eau pressurisée et, plus particulièrement, la détermination et l'évaluation de la marge d'arrêt d'urgence du réacteur d'une telle centrale. Elle vise plus précisément une évaluation de la marge d'arrêt d'urgence qui prenne en compte préventivement la perte accidentelle de la vapeur du circuit secondaire.

Les centrales nucléaires à eau pressurisée sont bien connues. Sommairement, elles comprennent un réacteur contenant, dans une cuve, des assemblages combustibles formés de crayons combustibles contenant le matériau fissile ; dans certains d'entre eux s'insèrent des crayons ou barres de contrôle mobiles contenant un matériau absorbant les neutrons. Les crayons de contrôle d'un assemblage combustible, commandés ensemble, forment une grappe de contrôle. Les assemblages combustibles sont plongés dans l'eau sous pression qui circule dans un circuit primaire possédant plusieurs boucles primaires incluant chacune, une pompe primaire et un générateur de vapeur. L'une de ces boucles comprend aussi un pressuriseur maintenant la pression d'eau dans le réacteur. L'eau sous pression sert de fluide modérateur et caloporteur. De plus, elle contient du bore en solution, matériau absorbant neutronique servant, de même que les grappes de contrôle, au pilotage du fonctionnement du réacteur.

Les générateurs de vapeur alimentent en vapeur un circuit secondaire comprenant, pour l'essentiel, une turbine entraînant un alternateur, un condenseur et des pompes.

La réactivité est une mesure de l'évolution de la réaction en chaîne au coeur du réacteur. Dans cette réaction en chaîne, les neutrons produits par la fission de noyaux lourds, ralentis par le modérateur qui est l'eau sous pression du circuit primaire, plus ou moins absorbés par les barres de contrôle et le bore en solution, viennent à leur tour provoquer de nouvelles fissions. Le facteur, appelé k, par lequel se trouve multiplié le nombre de fissions d'une génération à la suivante est généralement égal à 1. Il peut être temporairement supérieur à 1. On appelle réactivité l'écart positif de k par rapport à 1. Elle se chiffre en pcm (parties par cent mille). En présence d'une réactivité non nulle, la réaction en chaîne tend à croître. A d'autres moments, le facteur k peut être inférieur à 1, la réactivité est négative et l'on parle alors d'antiréactivité. Dans ce cas, la réaction tend à s'étouffer.

La puissance du réacteur est ajustée par action sur la réactivité, en fait par action sur la position des barres de contrôle et/ou sur la concentration en bore. Pour augmenter la puissance, on apporte une réactivité positive. La réaction s'accroît. La température augmente dans le réacteur et la densité de l'eau du circuit primaire décroît. Son effet modérateur diminue, ce qui équivaut à un apport d'antiréactivité, laquelle finalement équilibre la réactivité. Le réacteur se stabilise alors à un niveau de puissance augmenté. Pour diminuer la puissance on opère à l'inverse.

Le réacteur peut ainsi fournir la puissance thermique qui lui est demandée, généralement pour faire face aux besoins d'électricité du réseau auquel est couplée la centrale.

Dans les considérations qui gouvernent le choix entre les deux modes de pilotage d'un réacteur nucléaire, par les barres de contrôle ou le niveau du bore, il faut tout d'abord mentionner que, si l'action sur les barres de contrôle a des effets immédiats, l'action par le bore en solution est comparativement plus lente.

En outre, l'augmentation de la concentration du bore en solution, demande des moyens de stockage et d'injection d'acide borique, tandis que sa diminution demande des moyens de dilution et, surtout, de traitement et de stockage des effluents, moyens d'autant plus importants et coûteux que l'on aura plus souvent et plus longtemps recours à l'action par le bore en solution.

On tend ainsi à n'utiliser le bore en solution que pour corriger les effets à long terme sur la réactivité du fonctionnement du réacteur, c'est-à-dire essentiellement l'effet xénon et le vieillissement du combustible.

Le pilotage de la puissance thermique fournie par le réacteur pour répondre aux besoins du réseau électrique est ainsi de préférence effectué par les barres de contrôle. Mais l'insertion des barres de contrôle affecte, de façon préjudiciable, la distribution axiale de la puissance produite dans le réacteur. Il en résulte des inégalités de température dans le coeur du réacteur, avec notamment, une usure accélérée du combustible aux endroits les plus chauds et une production localisée de xénon, facteurs intervenant de façon restrictive dans la procédure de pilotage du réacteur et imposant un recours corrélatif à l'action sur le niveau du bore en solution.

Or, avec le développement de la part des centrales nucléaires dans la production totale d'électricité il est devenu nécessaire que les centrales nucléaires, initialement utilisées en centrales de base, à niveau de production quasi-constant, soit employées en suivi de charge, avec un niveau de production épousant une courbe journalière, et même en mode asservi, par téléréglage, le niveau de production se conformant à une courbe arbitraire, multipliant ainsi les actions de pilotage, avec les conséquences défavorables mentionnées plus haut. On a donc recherché des procédés de pilotage par les barres de contrôle dans lesquels la distorsion de la distribution axiale de puissance serait réduite et ses effets préjudiciables limités.

C'est ainsi qu'il est décrit, dans le brevet fran‐ çais FR‐A‐2 395 572, un procédé de conduite d'un réacteur nucléaire dans lequel, pour contrôler les effets de réactivité dus aux variations de puis‐ sance, on déplace, en fonction de la puissance demandée à la turbine uniquement, des groupes composés de grappes de matériau absorbant dont un au moins a une antiréactivité réduite, pour faire varier la puissance du réacteur, ainsi qu'un groupe, appelé groupe R, composé de grappes très ab‐ sorbantes, en fonction de la différence existant à chaque instant entre la température moyenne du coeur du réacteur et une température de référence, qui est fonction du niveau de puissance demandé, l'action sur la concentration du bore en solution servant à maintenir le groupe R dans une certaine plage, en plus de corriger les effets à long terme de réactivité.

Plus tard, dans la demande de brevet EP‐A 0 051 542 correspondant au brevet FR‐A 2 493 582, on a décrit un procédé de conduite d'un réacteur nucléaire par déplacement conjugué, dans le coeur de ce réacteur, de groupes de barres de commande, de façon telle que les perturbations de la distribution axiale de puissance soient toujours limitées, ce qui permet d'éviter le recours au bore en solution, dont la concentration est alors ajustée seulement de manière à compenser les effets du dégagement de xénon et du vieillissement des crayons combustibles.

Si ce dernier procédé procure des avantages indéniables dans le fonctionnement normal d'un réacteur, il n'en comporte pas moins un inconvé‐ nient dans le domaine de la sureté, lorsque l'on prend en compte le risque d'une rupture acciden‐ telle du circuit secondaire.

Dans une telle situation, le circuit secondaire est soudainement refroidi. Il en va de même des circuits primaires et du coeur du réacteur. Les dispositifs de sécurité se déclenchent et provoque l'insertion totale de toutes les grappes de contrôle et une injection de bore de sécurité. Il s'ensuit normalement l'arrêt du réacteur.

Toutefois, dans les deux procédés de conduite décrits plus haut, au moment où cela se produit, le niveau de bore en solution peut être relativement faible, tandis que l'insertion des barres de contrôle peut être relativement importante. L'insertion complète des barres de contrôle apporte une antiréactivité suffisante pour stopper le dégage‐ ment de puissance thermique dans le réacteur. Cet effet, conjugué avec le refroidissement du circuit primaire causé par la rupture du circuit secondaire, entraîne une chute importante de température de l'eau dans le coeur du réacteur, donc une augmentation de son efficacité comme modérateur et un apport correspondant de réactivité. Comme l'effet de l'injection de bore de sécurité n'est pas immédiat, cet apport de réactivité pourrait l'em‐ porter sur l'antiréactivité apportée par l'insertion complète des barres de contrôle et la réaction reprendrait, temporairement, pouvant alors conduire, brièvement, à une élévation inacceptable de la température des éléments combustibles.

Cette difficulté a été perçue et surmontée par un procédé de détermination et d'évaluation de la marge d'arrêt d'urgence, c'est‐à‐dire de l'anti‐ réactivité disponible pour un arrêt d'urgence, par rapport à celle que nécessite spécifiquement une rupture de circuit secondaire, dans le but de pro‐ voquer des actions correctives, si elle est insuffi‐ sante.

Ce procédé, défini plus particulièrement en relation avec le procédé de conduite de réacteur nucléaire du FR‐A‐2 395 572, consiste essen‐ tiellement à surveiller l'antiréactivité que peut pro‐ curer à tout moment le groupe R. En effet, on peut considérer que la contribution des grappes de commande de puissance est nulle, jusqu'à leur insertion complète. Elles apportent bien une anti‐ réactivité, mais la diminution correspondante de la température du modérateur apporte une réactivité de même valeur. Par ailleurs, l'apport à cet égard de barres de sécurité est connu. Les grappes du groupe R, seules, sont dans une position conti‐ nuellement variable, qui ne dépend pas de la témperature ; leur position est donc le seul para‐ mètre à surveiller. Il faut ajouter que l'évaluation doit tenir compte, dans le sens de la sécurité, de toutes les imprécisions du procédé de conduite, notamment en ce qui concerne l'effet d'antiréacti‐ vité des barres de commande de puissance. L'an‐ tiréactivité requise est ainsi augmentée d'un terme de sécurité d'une valeur constante, défini par ap‐ proximation, pour couvrir les conditions les plus défavorables. De plus, l'antiréactivité que peuvent procurer les barres de régulation de température n'est qu'une valeur estimée, dérivée de la position des barres et d'une relation entre la position des barres et l'antiréactivité, dans le cas le plus défa‐ vorable du point de vue de la sûreté.

Un tel procédé n'est plus applicable dans le cas du procédé de conduite du brevet FR‐A 2 493 582. En effet, la distinction entre groupes de contrôle de puissance et groupe de régulation de température R y disparaît. La position des groupes de contrôle de puissance est continuellement va‐ riable suivant un programme complexe. Il n'existe plus un seul paramètre à surveiller, mais plusieurs et il ne s'agit plus seulement de la position de groupes de barres de commande.

La présente invention a donc pour objet un procédé de détermination de la marge d'arrêt d'urgence dans les réacteurs à eau pressurisée qui convienne au procédé de conduite considéré en second et même, plus généralement, à tout procédé de conduite.

De plus, comme on l'a mentionné, le procédé de détermination de la marge d'arrêt d'urgence appliqué comprend une approximation d'influences non mesurées, sous la forme d'un terme sécurité accroissant l'antiréactivité requise et une autre approximation quant à l'antiréactivité que peuvent procurer à tout moment les barres de régulation de température. Il en résulte souvent des restrictions indues dans le pilotage du réacteur.

L'invention a également pour objet un procédé de détermination de la marge d'arrêt d'urgence qui ne souffre pas de telles restrictions.

Le procédé de détermination et d'évaluation de la marge d'arrêt d'urgence d'un réacteur nucléaire à eau pressurisé de la présente invention consiste à calculer une marge d'arrêt par l'application de la formule générale :

$$Mar = \Delta Pg + \Delta Pp - \Delta Pr,$$

dans laquelle Mar est la marge d'arrêt recherchée, $\Delta Pg$ est l'antiréactivité (de signe négatif) attribuée à l'ensemble des barres de contrôle du réacteur quand cet ensemble passe de l'insertion nulle à l'insertion complète, $\Delta Pp$ est la réactivité (de signe positif) apportée par un passage de la puissance nominale à une puissance nulle, $\Delta Pr$ est l'antiréactivité (négative) déjà consommée pour amener le réacteur dans la situation qu'il occupe à l'instant considéré et se calcule par l'application de la formule suivante :

$$\Delta Pr = EG + DC + EGo,$$

dans laquelle EG est l'antiréactivité qui découle de la position mesurée des grappes de régulation de puissance, en faisant intervenir la distribution axiale de puissance mesurée et l'épuisement du coeur préalablement défini, DC est un terme évaluant l'apport de réactivité obtenu par la baisse de puissance entre la puissance nominale et la situation actuelle du réacteur, EGo contenant une constante d'échelle.

Le terme DC peut être une somme comprenant un ou plusieurs des termes suivants :
- un premier terme DP correspondant à l'effet de réactivité de la réduction de puissance par rapport à la puissance nominale, qui est une fonction du premier degré de la distorsion axiale de puissance mesurée,
- un premier terme correctif FP correspondant à l'effet de réactivité de l'erreur à la puissance réelle, telle qu'elle est mesurée, causée par la distorsion de la répartition de densité de l'eau dans le coeur du réacteur, qui est une fonction du deuxième degré de la distorsion axiale de puissance mesurée,
- un deuxième terme correctif FT correspondant à l'effet de réactivité de l'écart entre la température moyenne du coeur, qui est une grandeur mesurée, et la température de consigne, qui est une grandeur préétablie.

Le procédé de l'invention prévoit également de déterminer l'écart entre la marge d'arrêt d'urgence ainsi calculée et une marge minimale calculée une fois pour toute pour le réacteur et considérée comme une constante, laquelle est incluse dans la constante EGo.

On prévoit également d'utiliser cet écart pour provoquer une action corrective consistant à modifier le niveau du bore en solution dans le circuit primaire.

Les différents objets et caractéristiques de l'invention seront maintenant exposés de façon détaillée dans la description qui va suivre d'un exemple de mise en oeuvre de l'invention faite en se reportant au dessin annexé qui représente, de façon très schématique, une centrale nucléaire à eau pressurisée.

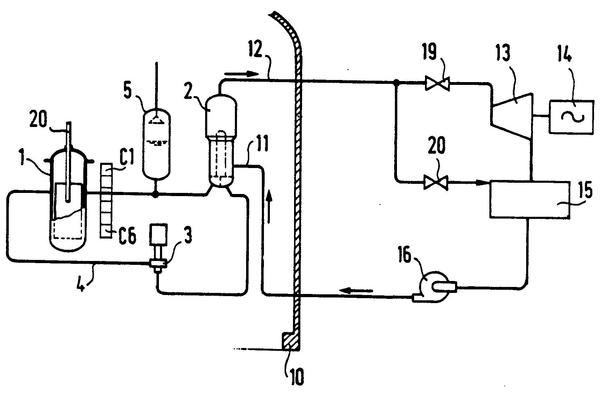

A la figure 1, le coeur d'un réacteur à eau pressurisée est représenté en 1, associé dans un circuit primaire 4 à un générateur de vapeur 2. Le mouvement de l'eau sous pression est forcé par une pompe primaire 3. Un pressuriseur 5 maintient le volume et la pression de l'eau dans le circuit primaire. Ces différents éléments sont disposés dans une enceinte 10 traversée par les conduites d'un circuit secondaire 12 branché sur le générateur de vapeur 2. Ce circuit secondaire 12 comprend une turbine 13, entraînant un alternateur 14, un condenseur 15 et une pompe secondaire 16. Des vannes 19 et 20 permettent le contournement de la turbine 13, pour maintenir le circuit secondaire dans un cas où l'entraînement de l'alternateur doit être interrompu.

Comme indiqué précédemment, le coeur du réacteur contient, dans une cuve, des assemblages combustibles formés de crayons combustibles contenant le matériau fissile ; dans certains d'entre eax s'insèrent des crayons ou barres de contrôle mobiles 20 contenant un matériau absorbant les neutrons. Les crayons de contrôle d'un assemblage combustible, commandés ensemble, forment une grappe de contrôle. Les assemblage combustibles sont plongés dans l'eau sous pression qui circule dans le circuit primaire 4, lequel possède en fait plusieurs boucles primaires dont une seule, celle qui est représentée à la figure inclut le pressuriseur 5. L'eau sous pression sert de fluide modérateur et caloporteur. De plus, elle contient du bore en solution, matériau absorbant neutronique servant, de même que les grappes de contrôle, au pilotage du fonctionnement du réacteur.

Les circuits d'injection de bore, sous forme d'acide borique, dans le circuit primaire 4, n'ont pas été représentés.

La figure indique enfin, en C1 à C6 des chambres à ionisation disposées auprès du réacteur, à l'extérieur de la cuve, pour la mesure du flux neutronique à différents niveaux de hauteur. En pratique, ces détecteurs sont composés de quatre détecteurs individuels par niveau, dont les signaux de sortie sont combinés pour fournir chacun un signal représentatif de la puissance instantanée émise pas le réacteur au niveau correspondant.

Par ailleurs, on n'a pas représenté des dispositif de mesure et de détermination de diverses variables telles que la température en divers endroits du circuit primaire, la profondeur d'insertion des barres de contrôle, la teneur en bore de l'eau sous pression dans le circuit primaire, etc.

Enfin, comme il est bien connu, l'état du coeur du réacteur est périodiquement redéfini, en plaçant le réacteur dans des conditions de fonctionnement déterminées et en effectuant alors des mesures spécifiques, dont certaines emploient des sondes introduites dans le coeur à cette occasion.

En fonctionnement, la puissance réelle du réacteur Prel est exprimée sous la forme d'une fraction de la puissance nominale, c'est-à-dire de la puissance maximale prévue dans le fonctionnement normal du réacteur, pour laquelle l'insertion des barres de contrôle est minimale. La puissance réelle est mesurée, par exemple, à partir des flux neutroniques indiqués par les détecteurs C1 à C6. La distorsion axiale de puissance, c'est-à-dire une valeur caractérisant la dissymétrie de la répartition de puissance réelle, sera également dérivée des signaux de sortie de ces détecteurs. La position des barres de contrôle est indiquée directement par des compteurs de pas d'insertion des grappes. Une température de référence Tref est définie en fonction de la puissance demandée au réacteur. Une température moyenne du coeur Tmoy est dérivée des températures mesurées dans le circuit primaire, à l'entrée de l'eau sous pression dans le réacteur et à sa sortie.

L'invention concerne un procédé de détermination et d'évaluation de la marge d'arrêt d'urgence pour un tel réacteur, dans une situation normale de fonctionnement, qui prenne en compte préventivement la perte de la vapeur du circuit secondaire 12.

Dans une telle situation, les automatismes de sureté, déclenchés par des excursions anormales des valeurs de pression et de température, provoquent l'insertion complètes de toutes les barres de contrôle, mais, par sécurité on devra prévoir qu'une des grappes puisse ne pas venir en insertion. En même temps a lieu une injection de bore de sécurité dont l'effet sera à coup sûr un arrêt de la réaction.

Le problème est que l'effet de la commande d'injection de bore n'est pas immédiat et que l'antiréactivité apportée par l'insertion des barres de contrôle doit être suffisante pour contre-balancer au moins la réactivité qu'apporte le refroidissement de l'eau du circuit primaire consécutif à l'échappement de la vapeur du circuit secondaire. On peut définir par le calcul cette réactivité d'origine accidentelle. Il y a donc lieu de veiller à ce que l'antiréactivité potentielle des grappes de contrôle demeure à tout moment suffisante pour permettre de faire face à ce besoin. Pour cela, il faut la déterminer et l'évaluer.

Selon l'invention, il est procédé au calcul d'une marge d'arrêt d'urgence par l'application de la formule générale :

$$Mar = \Delta Pg + \Delta Pp - \Delta Pr,$$

dans laquelle Mar est la marge d'arrêt (négative) recherchée, $\Delta Pg$ est l'antiréactivité (négative) attribuée à l'ensemble des barres de contrôle du réacteur quand cet ensemble passe de l'insertion nulle à l'insertion complète, $\Delta Pp$ est la réactivité (positive) apportée par un passage de la puissance nominale à une puissance nulle, $\Delta Pr$ est l'antiréactivité (négative) déjà consommée pour amener le réacteur dans la situation qu'il occupe à l'instant considéré et se calcule par l'application de la formule suivante :

$$\Delta Pr = EG + DC + EGo,$$

dans lequelle EG est l'antiréactivité qui découle de la position mesurée des grappes de régulation de puissance, en faisant intervenir la distribution axiale de puissance mesurée et l'épuisement du coeur préalablement défini, DC est un terme évaluant l'apport de réactivité obtenu par la baisse de puissance entre la puissance nominale et la situation actuelle du réacteur, EGo contenant une constante d'échelle.

En reprenant les différents termes des formules ci-dessus, du point de vue de leur mode d'élaboration :

- $\Delta Pg$, antiréactivité totale des barres de contrôle, en y incluant les grappes de commande de puissance et des grappes d'arrêt de sécurité, est une caractérisique préalablement déterminée du réacteur, dans laquelle on considèrera, par sécurité, qu'une grappe d'antiréactivité maximale ne vient pas en insertion,

- $\Delta Pp$, réactivité totale due au refroidissement de l'eau sous pression jusqu'à la température qui correspond à l'arrêt de la réaction est également une caractéristique préalablement déterminée du réacteur,

- ΔPr, antiréactivité consommée par les barres de contrôle insérées, dépendant par conséquent des conditions réelles de fonctionnement du réacteur.
- EGo est une constante.

Les termes ΔPg, ΔPp et EGo étant des constantes pré-établies conformément aux caractéristiques du réacteur, le procédé de l'invention prévoit donc seulement la détermination en ligne de ΔPr et l'on va maintenant fournir un exemple de mode de détermination des différentes parties qui le constituent.

Le terme EG correspond à l'antiréactivité consommée par l'insertion des barres et est déterminé à partir des signaux de mesure de puissance des détecteurs de flux neutroniques et des niveaux d'insertion des grappes de commande de puissance.

Selon un exemple de mise en oeuvre de l'invention, le terme EG résulte de l'application de la formule suivante, en notation matricielle :

$$EG = \frac{[Pref]\ [A]\ [Pr]}{[Pref]\ [Pr]}$$

dans laquelle [Pref] et [Pr] sont des vecteurs représentant une distribution axiale de puissance, le premier périodiquement redéfini dans une configuration de référence, afin de représenter l'épuisement axial du coeur, tandis que le second découle de mesures en ligne effectuées par les détecteurs de flux neutroniques.

L'un et l'autre sont déterminés par l'application d'une formule du type :

$$[P] = [T]^{-1}\ [S]^{-1}\ [I]$$

dans laquelle [P] est la distribution axiale de puissance, [T] est une matrice de transfert du système de mesure, [S] est une matrice de sensibilité des détecteurs et [I] représente les sorties de détecteurs neutroniques.

Le terme [A] est une matrice diagonale représentant l'antiréactivité apportées par les grappes de contrôle de puissance et il est la somme d'au-tant de termes :

$$[A] = C_I[G_I]$$

qu'il a de groupes de contrôle de puissance, $C_I$ étant l'efficacité intégrale du groupe, prédéterminée ou mesurée précédemment, et $[G_I]$ une matrice de position dont les termes sont définis directement par la position du groupe de contrôle indiquée par son compteur de pas d'insertion.

L'invention prévoit d'autre par d'évaluer l'apport de réactivité dû à la différence de puissance entre la puissance nominale et la situation actuelle du réacteur, sous la forme d'un terme DC. Pour serrer au plus près la valeur de réactivité déjà consommée, l'invention prévoit pour ce terme une somme comprenant un ou plusieurs des termes DP, FP, FT définis ci-après.

Le premier terme DP correspond à l'effet de réactivité de la réduction de puissance par rapport à la puissance nominale, qui est une fonction du premier degré de la distorsion axiale de puissance mesurée, selon la formule :

$$DP = (p1 + p2.Ao) (1 - Prel)$$

dans laquelle p1 et p2 sont des coefficients de dimensionnement constants, Prel a déjà été defini et Ao est la distorsion axiale de puissance qui est calculée par la formule :

$$Ao = \frac{Ph - Pb}{Ph + Pb},$$

Ph et Pb étant respectivement les puissances dans la zone haute et dans la zone basse du coeur, dérivées de mesures effectuées en ligne par les détecteurs neutroniques.

Le premier terme correctif FP correspond à l'effet de réactivité à la puissance réelle mesurée de la distorsion de la répartition de la densité de l'eau dans le coeur du réacteur, qui est une fonction du deuxième degré de la distorsion axiale de puissance mesurée, selon la formule :

$$FP = Prel (p3 + p4.Ao + p5.Ao^2),$$

p3, p4 et p5 étant à nouveau des coefficients de dimensionnement constants.

Le deuxième terme correctif FT correspond à l'effet de réactivité de l'écart entre la température moyenne du coeur, qui est une grandeur mesurée, et la température de consigne, qui est une grandeur préétablie, selon la formule :

$$FT = p6 (Tmoy - Tref),$$

p6 étant un nouveau coefficient constant et Tmoy étant la température moyenne du coeur du réacteur obtenue à partir des températures du circuit primaire à l'entrée et à la sortie du coeur.

Après ces correctifs, la détermination de l'antiréactivité potentielle des barres de contrôle est d'une grande précision, de sorte que le terme EGo peut être une simple constante d'échelle. Cette constante peut inclure cependant une marge minimale calculée une fois pour toute pour le réacteur et considérée comme une constante, qui est la marge permettant de faire face aux conséquences d'une rupture du circuit secondaire. Alors, dans ce cas, l'évaluation de la marge déterminée est simple, il suffit qu'elle soit supérieure à zéro.

L'invention prévoit aussi l'utilisation de la marge d'arrêt d'urgence ainsi déterminée et évaluée pour le déclenchement, par tous moyens d'une action corrective consistant à relever le niveau du bore en solution dans le circuit primaire.

Il est bien évident que les descriptions qui précèdent n'ont été fournies qu'à titre d'exemple non limitatif et que de nombreuses variantes peuvent être imaginées sans sortir pour autant du cadre de l'invention.

**Revendications**

1. Procédé de détermination et d'évaluation de la marge d'arrêt d'urgence d'un réacteur nucléaire à eau pressurisée, caractérisé en ce qu'il consiste à calculer une marge d'arrêt par l'application de la formule générale :

$$Mar = \Delta Pg + \Delta Pp - \Delta Pr,$$

dans laquelle Mar est la marge d'arrêt recherchée, $\Delta Pg$ est l'antiréactivité attribuée à l'ensemble des barres de contrôle du réacteur quand cet ensemble passe de l'insertion nulle à l'insertion complète, $\Delta Pp$ est la réactivité apportée par un passage de la puissance nominale à une puissance nulle, $\Delta Pr$ est l'antiréactivité déjà consommée pour amener le réacteur dans la situation qu'il occupe à l'instant considéré et se calcule par l'application de la formule suivante :

$$\Delta Pr = EG + DC + EGo,$$

dans laquelle EG est l'antiréeactivité qui découle de la position mesurée des grappes de puissance, en faisant intervenir la distribution axiale de puissance mesurée et l'épuisement du coeur préalablement défini, DC est un terme évaluant l'apport de réactivité obtenu par la baisse de puissance entre la puissance nominale et la situation actuelle du réacteur, EGo contenant une constante d'échelle.

2. Procédé conforme à la revendication 1 et caractérisé en ce que le terme DC est une somme comprenant un ou plusieurs des termes suivants :
   - un premier terme DP correspondant à l'effet de réactivité de la réduction de puissance par rapport à la puissance nominale, qui est une fonction du premier degré de la distorsion axiale de puissance mesurée,
   - un premier terme correctif FP correspondant à l'effet de réactivité de l'erreur à la puissance réelle, telle qu'elle est mesurée, causée par la distorsion de la répartition de densité de l'eau dans le coeur du réacteur, qui est une fonction du deuxième degré de la distorsion axiale de puissance mesurée,
   - un deuxième terme correctif FT correspondant à l'effet de réactivité de l'écart entre la température moyenne du coeur, qui est une grandeur mesurée, et la température de consigne, qui est une grandeur préétablie.

3. Procédé conforme à la revendication 2, caractérisé en ce que le premier terme DP correspond à l'effet de réactivité de la réduction de puissance par rapport à la puissance nominale, qui est une fonction du premier degré de la distorsion axiale de puissance mesurée, selon la formule :

$$DP = (p1 + p2.Ao) (1 - Prel)$$

dans laquelle p1 et p2 sont des coefficients de dimensionnement constants, Prel est la puissance relative fournie par le coeur, déterminée par la mesure en ligne du flux neutronique émis par le coeur du réacteur, et Ao est la distorsion axiale de puissance qui est calculée par la formule :

$$Ao = \frac{Ph - Pb}{Ph + Pb},$$

Ph et Pb étant respectivement les puissancee dans la zone haute et dans la zone basse du coeur, dérivées de mesures en ligne de flux neutroniques.

4. Procédé conforme à la revendication 2, caractérisé en ce que le premier terme correctif FP correspond à l'effet de réactivité de l'écart à la puissance réelle, telle qu'elle est mesurée, causée par la distorsion de la répartition de la densité de l'eau dans le coeur du réacteur, qui est une fonction du deuxième degré de la distorsion axiale de puissance mesurée, selon la formule :

FP = Prel (p3 + p4.Ao + p5.Ao$^2$),

p3, p4 et p5 étant des coefficients de dimensionnement constants.

5. Procédé conforme à la revendication 2, caractérisé en ce que le deuxième terme correctif FT correspond à l'effet de réactivité de l'écart entre la température moyenne du coeur, qui est une grandeur mesurée, et la température de consigne, qui est une grandeur prééétablie, selon la formule :

FT = p6 (Tmoy − Tref),

p6 étant un coefficient constant et Tmoy étant la température moyenne du coeur du réacteur obtenue à partir des températures du circuit primaire à l'entrée et à la sortie du coeur.

6. Procédé conforme à l'une des revendications 1 à 5, caractérisé en ce que, pour que la marge d'arrêt d'urgence ainsi calculée exprime l'écart par rapport à une marge minimale calculée une fois pour toute pour le réacteur et considérée comme une constante, cette marge minimale est incluse dans la constante EGo.

7. Procédé conforme à l'une quelconque des revendications précédentes caractérisé en ce qu'il inclut l'utilisation de la marge d'arrêt d'urgence pour provoquer une action corrective consistant à modifier le niveau du bore en solution dans le circuit primaire.

**Claims**

1. A method of determining and evaluating the emergency shutdown margin for a pressurized water nuclear reactor, characterized in that it consists in calculating a shutdown margin by application of the general formula

Mar = ΔPg + ΔPp − ΔPr,

in which Mar is the shutdown margin being sought, ΔPg is the negative reactivity attributed to the full set of the reactor's control rods when that set moves from fully withdrawn to fully inserted position, ΔPp is the reactivity brought about by the change from nominal power to zero power and ΔPr is the negative reactivity already consumed to bring the reactor into the situation it is in at the instant under consideration and is calculated by applying the formula

ΔPr = EG + DC + EGo,

where EG is the negative reactivity stemming from the position, as measured, of the power control clusters, allowing for the axial distribution of power as measured and the depletion of the core defined in advance, DC is a term evaluating the reactivity contributed by the drop in power from nominal power to the current situation of the reactor, with EGo containing a scale constant.

2. Method according to claim 1, characterized in that the term DC is a sum of one or more terms as follows:
   − a first term DP corresponding to the reactivity effect of the reduction of power in relation to nominal power, which is a function of the first degree of the measured distortion in axial power,
   − a first corrective term FP corresponding to the reactivity effect of the error in the actual power, as measured, caused by the distortion of the distribution of the density of the water in the reactor core, which is a function of the second degree of the measured axial power distortion,
   − a second corrective term FT corresponding to the reactivity effect of the difference between the cor's average temperature, which is a measured quantity, and the setpoint temperature, which is a set quantity.

3. Method according to claim 2, characterized in that the first term DP corresponds to the reactivity effect of the reduction in power from nominal power, which is a function of the first degree of the measured axial power distortion, based on the formula

DP = (p1 + p2.Ao)(1 − Prel)

where p1 and p2 are constant dimensioning coefficients, Prel is the relative power supplied by the core, determined by on-line measurement of the neutron flux emitted by the reactor core, and Ao is the axial power distortion computed by using the formula

Ao = (Ph − Pb)/(Ph + Pb)

Ph and Pb being the powers in the upper part and the lower part of the core respectively, derived from the on – line measurements of the neutron fluences.

4. Method according to claim 2, characterized in that the first corrective term, FP, corresponds to the reactivity effect of the deviation from the actual power, as measured, caused by the distortion of the density of the water in the core of the reactor, which is a function of the second degree of the measured axial power distortion, according to the formula

$$FP = Prel(p3 + p4.Ao + p5.Ao^2),$$

p3, p4 and p5 being constant dimensioning coefficients.

5. Method according to claim 2, characterized in that the second corrective term, FT, corre – sponds to the reactivity effect of the difference between the average temperature of the core, which is a measured variable, and the setpoint temperature, which is a preset quantity, ac – cording to the formula

$$FT = p6 (Tav - Tref),$$

p6 being a constant coefficient and Tav being the average temperature of the reactor core obtained from the primary circuit temperatures at the inlet and outlet of the core.

6. Method according to any of the claims 1 through 5, characterized in that in order for the emergency shutdown margin so calculated to express the difference with respect to a mini – mum margin calculated once and for all for the given reactor and considered as constant, said minimum margin is included in the constant EGo.

7. Method according to any of the claims 1 through 6, characterized in that the emergency shutdown margin is used to trigger a corrective action consisting in changing the level of boron in solution in the primary circuit.

**Patentansprüche**

1. Verfahren zur Bestimmung und Abschätzung der Notabschaltreserve eines Druckwasser – kernreaktors,
dadurch **gekennzeichnet,** daß
eine Abschaltreserve durch die Anwendung der allgemeinen Formel

$$Mar = \Delta Pg + \Delta Pp - \Delta Pr,$$

berechnet wird, wobei in dieser Formel Mar die gesuchte Abschaltreserve, $\Delta$Pg die der Ge – samtheit der Steuerstäbe des Reaktors zuge – ordnete Antireaktivität des Reaktors ist, wenn diese Gesamtheit von dem nichteingetauchten Zustand bis zum vollständigen Eintauchen übergeht, $\Delta$Pp die Reaktivität ist, die erzeugt wird durch den Übergang der nominalen Lei – stung zur Leistung 0, $\Delta$Pr die Antireaktivität ist, die schon verbraucht wurde, um den Reaktor in den Zustand zu bringen, den er im be – trachteten Moment einnimmt und die sich aus der Anwendung der folgenden Formel be – rechnet:

$$Pr = EG + DC + EGo,$$

wobei in dieser Formel EG die Antireaktivität ist, die sich aus der gemessenen Lage der Leistungseinstellstabbündel ergibt, unter Ein – beziehung der axialen gemessenen Lei – stungsverteilung und des vorab definierten Kernabstands, DC ist ein Ausdruck, mit dem die Reaktivitätszunahme abgeschätzt wird, die sich aus dem Leistungsabfall zwischen der Nominalleistung und der aktuellen Situation des Reaktors ergibt und wobei EGo eine Ska – lierungskonstante enthält.

2. Verfahren nach Anspruch 1,
dadurch gekennzeichnet, daß
der Ausdruck DC eine Summe ist bestehend aus einem oder mehreren der folgenden Aus – drücke:
   - einem ersten Ausdruck DP, der dem Reaktivitätseffekt entspricht, der sich aus der Verminderung der Leistung bezüglich der Nominalleistung ergibt und der eine Funktion ersten Grades der axialen Ver – zerrung der gemessenen Leistung ist,
   - einem ersten Korrekturterm FP, der dem Reaktivitätseffekt des Fehlers der tat – sächlichen Leistung, wie sie gemessen wird, entspricht, hervorgerufen durch die Verzerrung der Dichteverteilung des Wassers im Reaktorkern, die eine Funk – tion zweiten Grades der axialen Verzer – rung der gemessenen Leistung ist,
   - einem zweiten Korrekturterm FT, der dem Reaktivitätseffekt entspricht, der sich aus dem Unterschied zwischen der mittleren Kerntemperatur, die eine ge – messene Größe ist, und der Soll – Tem – peratur ergibt, die eine vorgegebene Größe ist.

3. Verfahren nach Anspruch 2,
dadurch gekennzeichnet, daß

der erste Ausdruck DP dem Effekt der Reaktivität aufgrund der Leistungsverminderung bezüglich der Nominalleistung entspricht, die eine Funktion ersten Grades der axialen Verzerrung der gemessenen Leistung ist, nach der Formel:

DP = (p1 + p2•Ao) (1 − Prel),

bei der p1 und p2 konstante Dimensionierungskoeffizienten sind, Prel die relative Leistung ist, die vom Reaktorkern abgegeben wird, bestimmt aus einer Meßreihe des vom Reaktorkern abgegebenen Neutronenflusses, und Ao die axiale Verzerrung der Leistung ist, die durch die Formel bestimmt wird:

$$Ao = \frac{Ph - Pb}{Ph + Pb},$$

wobei Ph und Pb jeweils die Leistungen in dem oberen bzw. in dem unteren Bereich des Reaktorkerns sind, die sich aus Reihenmessungen des Neutronenflusses ergeben.

4. Verfahren nach Anspruch 2,
dadurch gekennzeichnet, daß
der erste Korrekturterm FP im Effekt der Reaktivität entspricht, die sich aus dem Abstand zur tatsächlichen gemessenen Leistung ergibt, aufgrund der Dichteverteilungsverzerrung des Wassers im Kern des Reaktors, die eine Funktion zweiten Grades der axialen Verzerrung der gemessenen Leistung nach der Formel

FP = Prel (p3 + p4•A0 + p5•Ao$^2$) ist,

wobei p3, p4 und p5 konstante Dimensionierungskoeffizienten sind.

5. Verfahren nach Anspruch 2,
dadurch gekennzeichnet, daß
der zweite Korrekturterm FT dem Reaktivitätseffekt des Abstands zwischen der mittleren Temperatur des Kerns, die eine Meßgröße ist, und der Soll−Temperatur ist, die eine vorbestimmte Größe ist, nach der Formel:

FT = p6 (Tmoy − Tref),

wobei p6 ein konstanter Koeffizient ist und Tmoy die mittlere Temperatur des Reaktorkerns ist, erhalten ausgehend von den Temperaturen des Primärkreises am Eingang und am Ausgang des Kerns.

6. Verfahren nach einem der Ansprüche 1 bis 5,
dadurch gekennzeichnet, daß
damit die so berechnete Notabschaltreserve den Unterschied im Verhältnis zu einer minimalen ein für allemal berechneten Reserve für den Reaktor bestimmt, die als konstant angenommen wird, diese minimale Reserve in der Konstanten EGo enthalten ist.

7. Verfahren nach einem der vorstehenden Ansprüche,
dadurch gekennzeichnet, daß
es die Verwendung der Notabschaltreserve zur Auslösung einer Korrekturmaßnahme aufweist, die darin besteht, den Gehalt an gelöstem Bor im Primärkreis zu ändern.